# EUROPEAN PATENT APPLICATION

(11) **EP 2 180 580 A2**
(43) Date of publication of application: **28.04.2010**
(21) Application number: 09173644.7
(22) Date of filing: 21.10.2009
(51) Int. Cl.: H02K 3/28

(54) **Motor**

(30) Priority: 22.10.2008 JP 2008272011
(71) Applicant: JTEKT Corporation, Osaka-shi Osaka 542-8502 (JP)
(72) Inventor: Yamaguchi, Shigetoshi, Osaka-shi, Osaka 542-8502 (JP)
(74) Representative: TBK-Patent

(57) **Abstract**

A motor (40) includes twelve stator teeth (52) arranged at equal intervals in the circumferential direction. A three phase first coil group (Sa) is formed by star-connecting of coils (S₁, S₃, S₅, S₇, S₉ and S₁₁) formed on the odd-numbered teeth (52), and a three phase second coil group (Sb) is formed by delta-connecting coils (S₂, S₄, S₆, S₈, S₁₀ and S₁₂) formed on the even-numbered teeth (52), the first coil group (Sa) and the second coil group (Sb) are connected in parallel.

## Description

### BACKGROUND OF THE INVENTION

### 1. Field of the Invention

The invention relates to a motor.

### 2. Description of the Related Art

A motor indicated in the following Japanese Patent Application Publication No. 2007-221961 (JP-A-2007-221961) is an example of a motor that assists steering in an electric power steering apparatus. This motor is a 3-phase, 10-pole, 12-tooth motor that includes a stator having the teeth. Two coils are wound around each tooth by concentrated winding. One of alternating current from among U phase current, V phase current and W phase current is supplied to each coil of the same tooth.

As a result, a magnetomotive force vector of a lower order component than a spatial 5th order component that is a synchronous component of stator magnetomotive force (coil magnetomotive force) is dispersed to reduce synthetic vectors thereof. Eddy current loss of a field pole is reduced by reducing synthetic vectors of low order components of stator magnetomotive force in this manner.

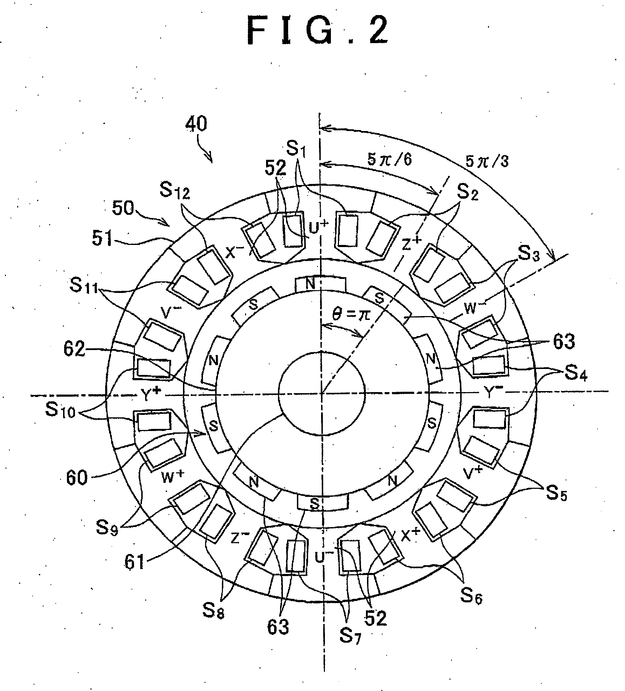

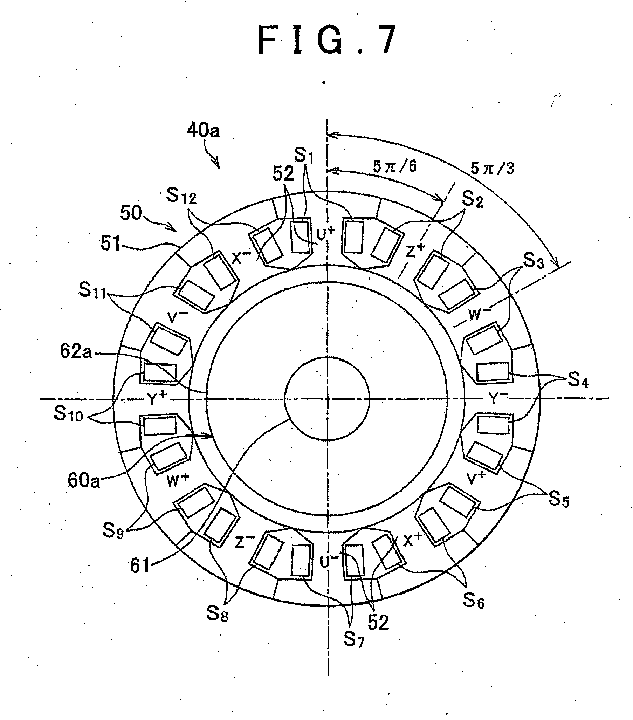

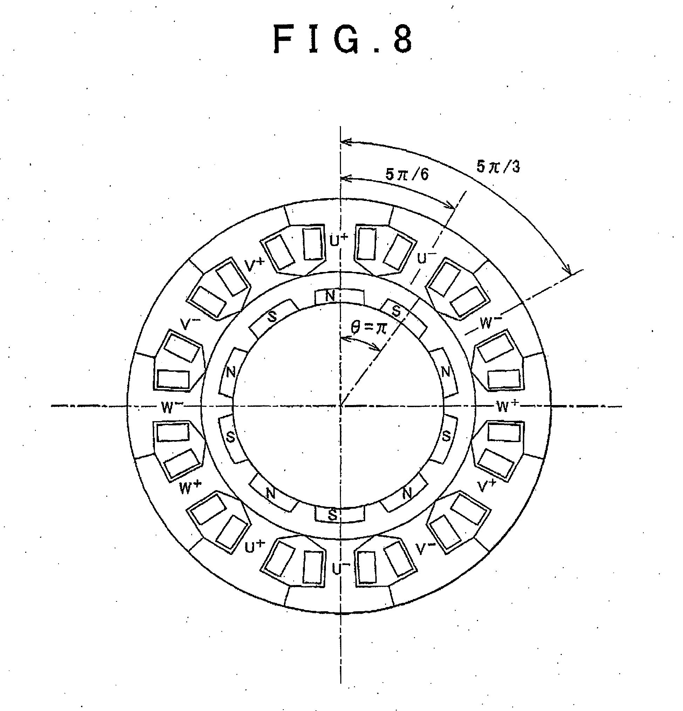

FIG 8 is a circumferential cross-sectional view of a motor in the related art. Furthermore, in FIG. 8 as well as in FIGS. 2 and 7 to be described later, the sizes of air gaps and the like are exaggerated for the sake of explanation. However, when coils are wound by concentrated winding to achieve reduced size and higher efficiency of three phase brushless motor, since the distribution of magnetomotive force of the coils changes in a stepwise manner at a phase difference of π/3 (rad), torque ripple of a 6th order component is generated due to higher harmonics of coil magnetomotive force.

Torque ripple of a 6th order component as described above is a problem for three phase brushless motor employing concentrated winding, and in the motor indicated in the above-mentioned JP-A-2007-221961, by dispersing the magnetomotive force vector of each phase in the manner described above, torque ripple of a 6th order component of coil magnetomotive force can be reduced in comparison with the case of winding a single coil on a single tooth by concentrated winding (see FIG. 8).

However, since two coils are respectively wound on each tooth by concentrated winding, there is the problem of increased production costs attributable to poor productivity as compared with the case of winding a single coil by concentrated winding. In addition, since the number of lead wires extending from the coils is doubled for each tooth, in addition to poor work efficiency, the occupancy rate of the coils also ends up becoming poor, thereby hindering motor size reduction.

### SUMMARY OF THE INVENTION

The invention provides a motor capable of reducing torque ripple of a 6th order component.

A motor according to one aspect of the invention includes: a stator having 12n teeth at equal intervals in a circumferential direction of the motor, with a coil being formed on each of the teeth; where n is a natural number; and a rotor having magnetic poles, the number of magnetic poles being one of 2n, 10n and 14n, where n is a natural number; a three phase first coil group formed by star-connecting the coils formed on the odd-numbered teeth; and a three phase second coil group formed by delta-connecting the coils formed on the even-numbered teeth, connected to the three phase first coil group in parallel.

In the motor of the above aspect, in the 12n teeth arranged at equal intervals in the circumferential direction of the motor, the three phase first coil group is formed by star-connecting the coils formed on the odd-numbered teeth, and the three phase second coil group is formed by delta-connecting the coils formed on the even-numbered teeth, and the first coil group and the second coil group are connected in parallel.

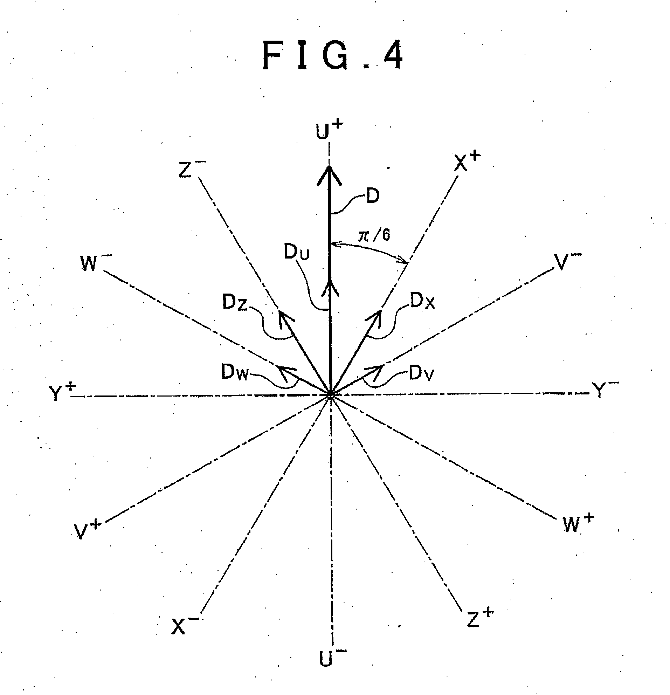

For example, in a 10-pole, 12-slot motor having a first coil group (U, V and W phases) and a second coil group (X, Y and Z phases), when each coil is connected in the manner of U⁺, X⁻, V⁻, Y⁺, W⁺, Z⁻, U⁻, X⁺, V⁺, Y⁻, W⁻, Z⁺ at equal intervals in the counter-clockwise direction as viewed from one side in the axial direction, the Z⁺ and Z⁻ coils, W⁺ and W⁻ coils, Y⁺ and Y⁻ coils, V⁺ and V⁻ coils, X⁺ and X⁻ coils are respectively wound at the locations of electrical angles of 5π/6, 5π/3, π/2 (5π/2), 4π/3 (10π/3) and π/6 (25π/6) with respect to U⁺ and U⁻ coils in the clockwise direction as viewed from one side in the axial direction (see FIG. 2). In other words, X, Y and Z phases are each wound at locations of π/6 at an electrical angle θ with respect to the U, V and W phases (see FIG. 4). Furthermore, the symbols "⁺" and "⁻" indicate that the coils are wound in mutually opposite directions.

When the first coil group and the second coil group configured in this manner are connected in parallel (by connecting the U phase and X phase, V phase and Y phase, and W phase and Z phase), and a three phase sine-wave current is allowed to flow to both the coil groups, the current phase in the second coil group shifts by π/6 (rad), namely by a half period, relative to the current phase in the first coil group. Consequently, torque ripple of a 6th order component generated in the first coil group is canceled out by torque ripple of a 6th order component generated in the second coil group. Thus, torque ripple of 6th order component can be reduced.

In addition, since the magnetomotive force vector in the first coil group and the magnetomotive force vector in the second coil group are dispersed by shifting by π/6 (rad), 12 magnetomotive force vectors can be generated, which is the double the number of the related art. As a result, magnetic flux of a rotor such as a field element can be utilized more effectively, thereby increasing the amount of torque able to be output.

In the motor of the above aspect, the number of windings of the first coil group may be smaller than the number of windings of the second coil group. Since the first coil group is connected in a star connection while the second coil group is connected in a delta connection, when both coil groups are connected in parallel, a larger current flows through the first coil group than the second coil group in the case where the winding ratios of the two groups are equal, and the difference in generated magnetomotive force between the two coil groups ends up becoming large. Therefore, by making the number of windings of the first coil group smaller than the number of windings of the second coil group, by making the winding ratio of the number of windings of the first coil group to the number of windings of the second coil group to be 1:√3, for example, the difference in magnetomotive force attributable to a current difference between the two coil groups can be decreased.

In addition, in the motor of the above aspect, the wire diameter of the second coil group may be made smaller than the wire diameter of the first coil group by making the ratio of wire diameter of the second coil group to wire diameter of the first coil group to be 0.76:1, for example. As a result, the resistance ratio of the first coil group to the second coil group becomes 1:3. In this case of the resistance ratio, the first coil group and the second coil group become equivalent circuits using star-delta conversion, and the current ratio becomes the ideal current ratio of √3:1.

In addition, the above-mentioned motor may be applied to an electric power steering apparatus. In the electric power steering apparatus, the motor of the above aspect may also assist steering by generating an assist power based upon a steering status. As a result, the electric power steering apparatus can reduce torque ripple of 6th order component. Thus, the use of such a motor makes it possible to obtain a favorable steering feel as a result of suppressing torque ripple to a low level.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1A is a block diagram showing an example of the overall configuration of an electric power steering apparatus in a first embodiment of the invention;
FIG. 1B is a circuit block diagram showing an example of the configuration of an electronic control unit (ECU);
FIG. 2 is a circumferential cross-sectional view of a motor in a first embodiment of the invention;
FIG. 3 is a connection diagram of the motor in the first embodiment of the invention;
FIG. 4 is a vector diagram showing the magnetomotive vectors of each phase in the motor in the first embodiment of the invention;
FIG. 5 is a graph showing an output torque T corresponding to an electrical angle of the motor in the first embodiment of the invention and a motor in the related art;
FIG. 6 is a graph showing the frequency components of torque ripple of the motor in the first embodiment of the invention and the motor in the related art;
FIG. 7 is a circumferential cross-sectional view of a motor in a second embodiment of the invention; and
FIG 8 is a circumferential cross-sectional view of the motor in the related art.

### DETAILED DESCRIPTION OF EMBODIMENTS

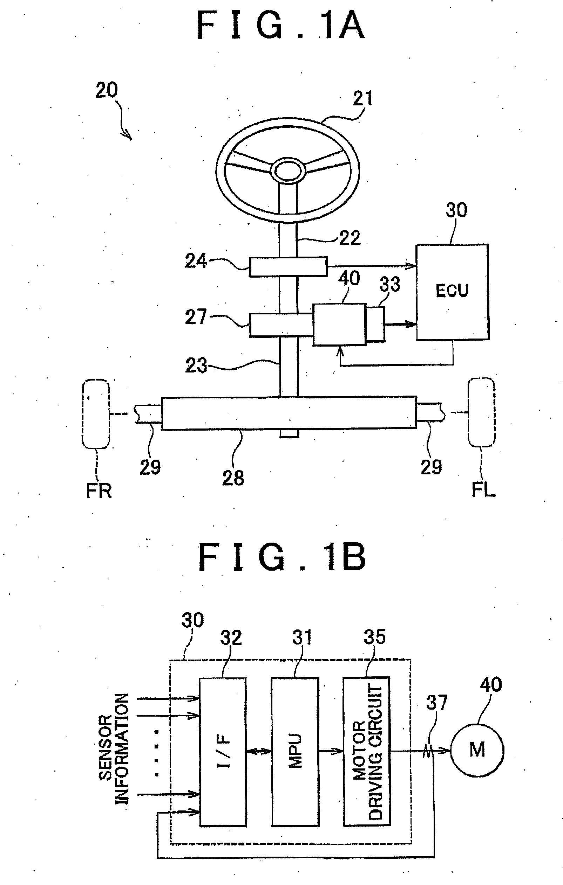

The following provides an explanation of a first embodiment of the invention with reference to the drawings. First, an explanation is provided of the configuration of an electric power steering apparatus 20 employing a motor 40 in a first embodiment based on FIGS. 1A and 1B. FIG. 1A is a block diagram showing an example of the overall configuration of an electric power steering apparatus in a first embodiment of the invention, while FIG. 1B is a circuit block diagram showing an example of the configuration of an ECU 30.

The electric power steering apparatus 20 mainly includes a steering wheel 21, a steering shaft 22, a pinion input shaft 23, a steering sensor 24, a speed reducer 27, a rack and pinion 28, a rod 29, an ECU 30, a motor rotation angle sensor 33 and a motor 40.

As shown in FIG. 1A, one end of the steering shaft 22 is connected to the steering wheel 21, and an input side of the steering sensor 24 is connected to another end of the steering shaft 22. In addition, one end of the pinion input shaft 23 of the rack and pinion 28 is connected to an output side of the steering sensor 24. The steering sensor 24 includes a torsion bar not shown and two resolvers attached to both ends of the torsion bar so that the torsion bar is interposed therebetween, and detects steering torque and steering angle of the steering wheel 21 by detecting the amount of torsion and the like that is generated between an input and output, the input being one end of the torsion bar and the output being the other end, with the two revolvers.

The speed reducer 27 is coupled to an intermediate location of the pinion input shaft 23 connected to the output side of the steering sensor 24, and transmits assist power output from the motor 40 to the pinion output shaft 23 through the speed reducer 27.

Namely, although not shown in the drawings, the speed reducer 27 as a motive power transmission mechanism is configured such that a motor gear attached to an output shaft of the motor 40 mutually meshes with a speed reduction gear of the speed reducer 27, and motive power (assist power) of the motor 40 can be transmitted to the pinion input shaft 23 by rotation of the speed reduction gear of the speed reducer 27 at a prescribed reduction ratio upon rotation of the output shaft of the motor 40.

The motor rotation angle sensor 33, which is able to detect the rotation angle of the motor 40, is attached to the motor 40, and driving of the motor 40 is controlled by the ECU 30 based on steering torque, steering angle and the like according to the motor rotation angle and the steering sensor 24.

On the other hand, a pinion gear capable of meshing with a rack groove in a rack shaft not shown that is a component of the rack and pinion 28 is formed on another end of the pinion input shaft 23. In the rack and pinion 28, rotary motion of the pinion input shaft 23 can be converted to linear motion of the rack shaft, the each rod 29 is coupled to each end of the rack shaft, and steered wheels FR and FL are coupled to the ends of the rods 29 via knuckles and the like not shown. As a result, since the actual steering angle of the steered wheels FR and FL can be changed via the rack and pinion 28, the rod 29 and the like when the pinion input shaft 23 rotates, the steered wheels FR and FL can be steered in accordance with the amount of rotation and direction of rotation of the pinion input shaft 23.

The ECU 30 is mainly composed of a microprocessor unit (MPU) 31 that is provided with components that include a peripheral large-scale integration (LSI) such as an analog/digital (A/D) converter and memory, an input/output interface (I/F) 32 that enables input and output of various types of sensor information (steering torque signal, steering angle signal, motor rotation angle signal) from the steering sensor 24 and the motor rotation angle sensor 33, and a motor driving circuit 35 capable of supplying a motor current to the motor 40 in accordance with pulse width modulation (PWM) control based on a motor current command output from the MPU 31. Furthermore, reference symbol 37 in FIG. 1B indicates a current sensor 37 capable of detecting motor current that actually flows to the motor 40. The sensor information relating to motor current detected by the current sensor 37 can be input to the MPU 31 via the input/output I/F 32 in the form of a motor current signal.

As a result of being configured in this manner, in the electric power steering apparatus 20, steering status according to the steering wheel 21 is detected by the steering sensor 24, and motor command current based upon that status is controlled by the ECU 30 so as to be output to the motor 40. As a result, the electric power steering apparatus 20 is able to assist steering operation by a driver with the steering wheel 21 by generating assist power with the motor 40 based upon that steering status.

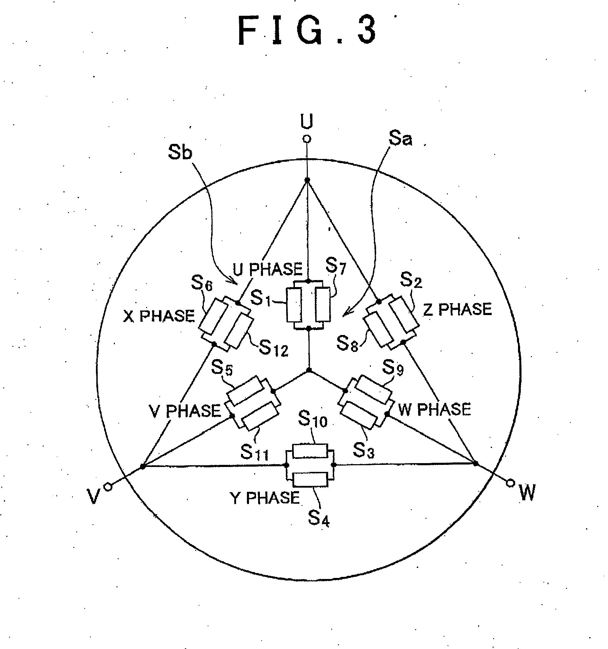

The following provides a detailed explanation of the configuration of the motor 40 in a first embodiment using FIGS. 2 and 3. FIG. 2 is a circumferential cross-sectional view of the motor 40 in a first embodiment of the invention. FIG. 3 is a connection diagram of the motor 40 in a first embodiment of the invention.

As shown in FIG. 2, the motor 40 is a 3-phase, 10-pole, 12-slot brushless motor mainly provided with a stator 50 fixed on the inner peripheral surface of a housing (not shown), and a rotor (rotator) 60 that functions as a field element and that is arranged inside the stator 50.

The stator 50 is provided with a separable stator core 51 for the 10 poles and 12 slots that composes 12 stator teeth 52 arranged at equal intervals in the circumferential direction, and 12 coils S₁ to S₁₂ wound by concentrating winding on each stator tooth 52. Each coil S₁ to S₁₂ is arranged in the manner of S₁, S₂, S₃, ..., S₁₂ at equal intervals moving in the clockwise direction when viewed along the axial direction (see FIG. 2).

As shown in FIG. 3, each coil S₁ to S₁₂ is connected to a bus bar not shown, coils S₁, S₃, S₅, S₇, S₉ and S₁₁ formed on the odd-numbered stator teeth 52 are star-connected to form a three phase first coil group (U, V and W phases) Sa, coils S₂, S₄, S₆, S₈, S₁₀ and S₁₂ formed on the even-numbered stator teeth 52 are delta-connected to form a three phase second coil group (X, Y and Z phases) Sb, and the first coil group Sa and the second coil group Sb are connected in parallel.

Here, the ratio of the number of windings of the coils S₁, S₃, S₅, S₇, S₉ and S₁₁ that form the first coil group Sa to the number of windings of the coils S₂, S₄, S₆, S₈, S₁₀ and S₁₂ that form the second coil group Sb is set to 1:√3 to decrease the difference in magnetomotive force attributable to a current difference between the first coil group Sa and the second coil group Sb. Furthermore, the ratio of the number of windings between the two coil groups Sa and Sb is not limited to 1:√3, but rather may also be set so that the number of windings of the first coil group Sa is smaller than the number of windings of the second coil group Sb such as by setting to a value close to 1:√3.

More specifically, in the first coil group Sa, coils S₁ and S₇ are mutually connected in parallel and function as U-phase coils (U⁺, U⁻), coils S₅ and S₁₁ are mutually connected in parallel and function as V-phase coils (V⁺, V), and coils S₃ and S₉ are mutually connected in parallel and function as W-phase coils (W⁺, W). In addition, in the second coil group Sb, coils S₆ and S₁₂ are mutually connected in parallel and function as X-phase coils (X⁺, X⁻), coils S₄ and S₁₀ are mutually connected in parallel and function as Y-phase coils (Y⁺, Y⁻), and coils S₂ and S₈ are mutually connected in parallel and function as Z-phase coils (Z⁺, Z⁻).

By mutually connecting two coils (e.g., coils S₁ and S₇) in parallel for each phase in this manner, connection processing becomes easy and coil occupancy rate is improved since the coils are wound with a narrow wire diameter as compared with the case of mutually connecting two coils in series. Furthermore, in the U-phase coils, U⁺ and U' are wound in mutually opposite directions, and in the case of coils of other phases as well, the symbols "⁺" and "⁻" indicate that the coils are wound in mutually opposite directions.

The rotor 60 is arranged inside the stator 50 so as to be configured at a fixed distance (air gap) from the inner peripheral surface of the stator core 51. The rotor 60 is provided with a shaft 61 rotatably supported by a bearing not shown, a rotor yoke 62 fixed to the shaft 61 so as to prevent relative rotation thereof, and 10 permanent magnets 63 in which N and S poles are alternately arranged at equal intervals in the circumferential direction on the outer peripheral surface of the rotor yoke 62.

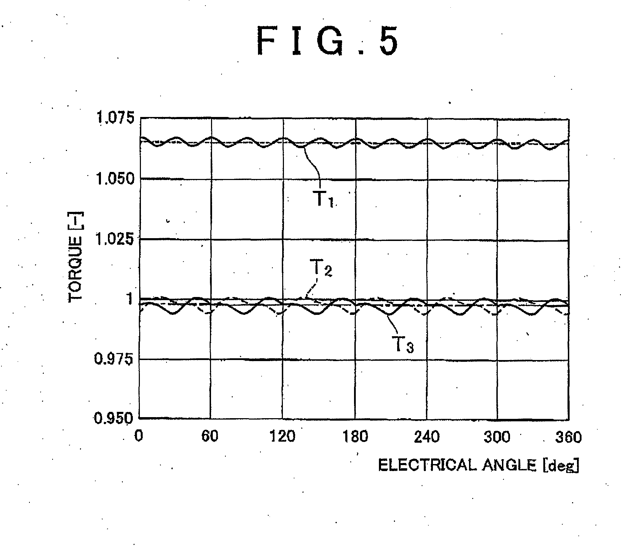

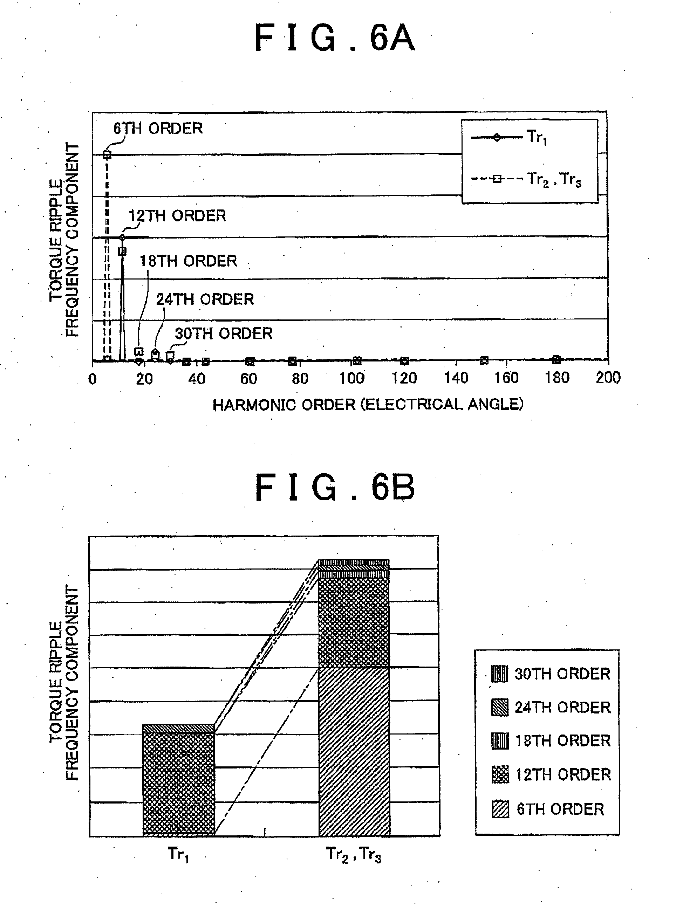

Next, an explanation is provided of the electrical characteristics of the motor 40 configured in the manner described above with reference to the drawings. FIG. 4 is a vector diagram showing the magnetomotive force vector of each phase in the motor 40 in the first embodiment of the invention. FIG. 5 is a graph showing values of output torque T corresponding to electrical angles θ of the motor 40 in the first embodiment of the invention and a motor in the related art. FIGS. 6A and 6B are graphs showing frequency components of torque ripple of the motor 40 in the first embodiment of the invention and the motor in the related art.

As shown in FIG. 2, the angle from an N pole to an adjacent S pole of the permanent magnets 63 is equivalent to the electrical angle θ in rads (π). This being the case, the Z phase (coils S₂ and S₈) is wound to the location of 5π/6 at an electrical angle θ with respect to the U phase (coils S₁ and S₇) in the clockwise direction when viewed along the axial direction. In addition, the W phase (coils S₃ and S₉) is wound to the location of 5π/3 at an electrical angle θ with respect to U phase (coils S₁ and S₇) in the clockwise direction when viewed along the axial direction, and the Y phase (coils S₄ and S₁₀) is wound to the location of π/2 (5π/2) at an electrical angle θ with respect to U phase (coils S₁ and S₇) in the clockwise direction when viewed along the axial direction. In addition, the V phase (coils S₅ and S₁₁) is wound at the location of 4π/3 (10π/3) at an electrical angle θ with respect to U phase (coils S₁ and S₇) in the clockwise direction when viewed along the axial direction, and the X phase (coils S₆ and S₁₂) is wound at the location of π/6 (25π/6) at an electrical angle θ with respect to U phase (coils S₁ and S₇) in the clockwise direction when viewed along the axial direction.

Namely, since the X, Y and Z phases are respectively wound at the location of π/6 at an electrical angle θ relative to the U, V and W phases, when a three phase sine wave current is applied to both coil groups Sa and Sb, the current phase in the second coil group Sb shifted by π/6 (rad), or a half period, relative to the current phase in the first coil group Sa. Consequently, as shown in FIG 4, since the magnetomotive force vector of each phase in the first coil group Sa and the magnetomotive force vector of each phase in the second coil group Sb are dispersed shifted by π/6 (rad) each, 12 magnetomotive force vectors, which is equal to twice the normal number, can be generated (see FIG. 4). Furthermore, in FIG. 4, magnetomotive force vectors generated by two coils wound in mutually opposite directions for each phase are indicated with a single vector, and since the magnetomotive force vector Dy of the Y phase is zero (0), five magnetomotive force vectors consisting of Du, Dw, Dx, Dy and Dz and one synthetic vector D are shown.

Since magnetic flux of the rotor 50 can be utilized more effectively by dispersing magnetomotive force vectors and increasing the number thereof in this manner, as shown in FIG. 5, an output torque T₁ able to be output by the motor 40 in the first embodiment (indicated with the thick solid line in FIG. 5) can be increased relative to an output torque T₂ of a motor employing a star connection in the related art (indicated with the wavy line in FIG. 5) or an output torque T₃ of a motor employing a delta connection in the related art (indicated with the thin solid line in FIG. 5).

In addition, as shown in FIGS. 6A and 6B, in a frequency analysis of torque ripple of the 6th, 12th, 18th, 24th and 30th order components, when a comparison is made of a frequency component Tr₁ of the torque ripple of the motor 40 in the first embodiment, a frequency component Tr₂ of the torque ripple of a motor employing a star connection in the related art, and a frequency component Tr₃ of the torque ripple of a motor employing a delta connection in the related art, torque ripple of the 6th order component and the components of odd-number multiples thereof of the motor 40 in the first embodiment is relatively reduced.

This is because, since the current phase is shifted by a half period (π/6) when a three phase sine wave current is applied to both coil groups Sa and Sb, the phase of torque ripple of the 6th order component generated in the first coil group Sa and the phase of torque ripple of the 6th order component generated in the second coil group Sb are shifted by π, thereby causing them to be canceled out and resulting in a reduction in torque ripple of the 6th order component. Similarly, since electrical angle 18th order and 30th order components are also canceled out, torque ripple is also reduced.

As has been explained above, among the 12 stator teeth 52 arranged at equal intervals in the circumferential direction in the motor 40 in the first embodiment, together with forming the three phase first coil group Sa by star-connecting coils S₁, S₃) S₅, S₇, S₉ and S₁₁ formed on the odd-numbered stator teeth 52, the three phase second coil group Sb is formed by delta-connecting coils S₂, S₄, S₆, S₈, S₁₀ and S₁₂ formed on the even-numbered stator teeth 52, and the first coil group Sa and the second coil group Sb are connected in parallel.

As a result, as shown in FIG. 4, since the X, Y and Z phases are respectively wound at the location of π/6 at an electrical angle θ with respect to the U, V and W phases and the current phases are shifted by a half period (π/6), the phase of torque ripple of the 6th order component generated in the first coil group Sa and the phase of torque ripple of the 6th order component generated in the second coil group Sb are shifted by π, thereby causing them to be canceled out. Thus, 6th order component torque ripple can be reduced. Similarly, since electrical angle 18th order and 30th order components are also canceled out, torque ripple is reduced.

In addition, since magnetomotive force vectors in the first coil group Sa and magnetomotive force vectors in the second coil group Sb are dispersed by being shifted by π/6 (rad), 12 magnetomotive force vectors can be generated, which is twice the number of the related art. As a result, magnetic flux of the rotor 50 can be utilized more effectively, thereby making it possible to increase the output torque T able to be output.

In addition, the winding ratio of the number of windings of the first coil group Sa and the number of windings of the second coil group Sb in the motor 40 in the first embodiment is set to 1:√3. As a result, a difference in magnetomotive force attributable to a current difference between the two coil groups Sa and Sb can be decreased.

In addition, in an electric power steering apparatus employing the motor 40 in the first embodiment, the electric power steering apparatus 20 can reduce torque ripple of 6th order component. Thus, the use of the motor 40 makes it possible to obtain a favorable steering feel as a result of suppressing torque ripple to a low level.

Furthermore, the invention is not limited to the first embodiment as described above, but rather may also be embodied in the manner described below, and in that case as well, actions and effects are obtained that are equivalent to those of the above-mentioned first embodiment. (1) FIG. 7 is a circumferential cross-sectional view of a motor in a second embodiment of the invention. The motor in a second embodiment of the invention is not limited to use as a brushless motor, but rather may also be used as an induction motor. More specifically, as shown in FIG. 7, for example, an induction motor 40a is provided with the previously described stator 50 and a rotor 60a in the form of a cage rotator, and the rotor 60a has a shaft 61 and a rotor body 62a fixed to the shaft 61 so as to prevent relative rotation thereof. The rotor body 62a is a conventional cage rotor, and is configured by having a plurality of conductors (not shown) penetrating along slots and shorting both ends in the axial direction of all of the conductors with shorting rings (not shown).

In the case of the induction motor 40a formed in this manner as well, torque ripple of 6th order component generated in the first coil group Sa is canceled out as a result of the phase with torque ripple of 6th order component generated in the second coil group Sb being shifted by π, thereby making it possible to reduce torque ripple of the 6th order component as well as components of odd-number multiples thereof.

(2) The previously described motor 40 is not limited to a 10-pole,12-slot brushless motor, but rather may also be a 2-pole, 12-slot or 14-pole, 12-slot brushless motor, and by connecting a star-connected coil group and a delta-connected coil group shifted by π/6 at an electrical angle θ in parallel, torque ripple of 6th order component is reduced and the amount of torque able to be output can be increased. In more general terms, if n is defined to be a natural number, then even if the motor 40 is a brushless motor provided with a stator that has 12 teeth and a coil formed by concentrated winding on each tooth and a rotor in which the number of magnetic poles is any one of 2n, 10n and 14n, the above-mentioned effects are demonstrated by connecting a star-connected coil group and a delta-connected coil group, which are shifted by π/6 at an electrical angle θ, in parallel. In addition, even if the induction motor 40a has the above-mentioned stator, the induction motor 40a can also reduce torque ripple of the 6th order component and the like..

(3) The winding ratio of the first coil group Sa to the second coil group Sb in the previously described stator 50 is not limited to being set to 1:√3, but rather the wire diameter of the second coil group Sb may be set to be smaller than the wire diameter of the first coil group Sa by setting the wire diameter ratio of the wire diameter of the second coil group Sb to the wire diameter of the first coil group Sa to 0.76:1. As a result, the resistance ratio of the first coil group Sa to the second coil group Sb becomes 1:3. In the case of the resistance ratio, the first coil group Sa and the second coil group Sb become equivalent circuits using star-delta conversion, and the current ratio becomes the ideal current ratio of √3:1.

(4) Although each of the above-mentioned embodiments have provided explanations using the example of employing the motor 40 in the invention to the electric power steering apparatus 20, the invention is not limited thereto, but rather the motor 40 may also be employed in general machinery such as a machine tool that uses the motor 40 as the driving power thereof.
A motor (40) includes twelve stator teeth (52) arranged at equal intervals in the circumferential direction. A three phase first coil group (Sa) is formed by star-connecting of coils (S₁, S₃, S₅, S₇, S₉ and S₁₁) formed on the odd-numbered teeth (52), and a three phase second coil group (Sb) is formed by delta-connecting coils (S₂, S₄, S₆, S₈, S₁₀ and S₁₂) formed on the even-numbered teeth (52), the first coil group (Sa) and the second coil group (Sb) are connected in parallel.

## Claims

1. A motor **characterized by** comprising:
a stator (50) having 12n teeth (52) at equal intervals in a circumferential direction of the motor, with a coil (S₁, S₂, S₃, ..., S₁₂) being formed on each of the teeth (52), where n is a natural number; and
a rotor (60,60a) having magnetic poles, the number of magnetic poles being one of 2n, 10n and 14n, where n is a natural number;
a three phase first coil group (Sa) formed by star-connecting the coils (S₁, S₃, S₅, S₇, S₉ and S₁₁) formed on the odd-numbered teeth (52); and
a three phase second coil group (Sb) formed by delta-connecting the coils (S₂, S₄, S₆, S₈, S₁₀ and S₁₂) formed on the even-numbered teeth (52), connected to the three phase first coil group (Sa) in parallel.

2. The motor according to claim 1, wherein
the number of windings of the three phase first coil group (Sa) is smaller than the number of windings of the three phase second coil group (Sb).

3. The motor according to claim 2, wherein
a ratio of the number of windings of the three phase first coil group (Sa) to the number of windings of the three phase second coil group (Sb) is substantially 1:√3.

4. The motor according to claim 1, wherein
a wire diameter of the three phase second coil group (Sb) is smaller than a wire diameter of the three phase first coil group (Sa).

5. The motor according to claim 4, wherein
a ratio of the wire diameter of the three phase first coil group (Sa) to the wire diameter of the three phase second coil group (Sb) is 0.76:1.

6. The motor according to any one of claim 1 to 5, wherein
the motor is used in an electric power steering apparatus that includes a detector (24) that detects a steering status, and
the motor assists steering operation by generating an assist power based upon a detected steering status.
